# EUROPEAN PATENT APPLICATION

(11) **EP 2 940 581 A1**
(43) Date of publication of application: **04.11.2015**
(21) Application number: 14305652.1
(22) Date of filing: 30.04.2014
(51) Int. Cl.: G06F 9/50, H04L 29/08

(54) **Method for managing user requests in a distributed computing environment, distributed computing environment and computer program product**

(71) Applicant: ALCATEL LUCENT, 92100 Boulogne-Billancourt (FR)
(72) Inventor: Cucinotta, Tommaso, Dublin, 15 (IE)
(74) Representative: Greenwood, Matthew David

(57) **Abstract**

A method for managing user requests in a distributed computing environment following a capacity change of a cluster including one or more virtual machine instances forming a component of a virtualised function in which at least one of the VM instances before the capacity change includes internal state information relating to a pre-capacity-change user request for the component, the method comprising using a controller to re-route post-capacity-change user requests referencing, implicitly or explicitly, the internal state information using matching rules mapping the or each pre-capacity-change VM instance with one or more post-capacity-change VM instance.

## Description

### TECHNICAL FIELD

The present invention relates, in general, to the management of user requests in a distributed computing environment.

### BACKGROUND

When realizing network functions to, for example, handle IP Multimedia System (IMS) requests or firewalling to be deployed in a virtualized/cloud infrastructure, an important feature to support is elasticity. That is, that the function is built of one or more horizontally scalable components comprising one or more instances deployed, for example, through virtual machines (VMs). The number of instances can be varied at run-time based on the instantaneous workload requirements, thereby enabling the component to be scaled according to changes in capacity or workload.

Normally, a load-balancer distributes the workload across the instances of the component running in the different VMs, typically with the aim of spreading the workload evenly across the VMs. A technical challenge with elastically scalable components is the provision of properly handling the full interaction life-cycle on behalf of one or a subset of users by properly handling internal state information that may be present within or for one or more of the VM instances of a component.

### SUMMARY

According to an example, there is provided a method for managing user requests in a distributed computing environment following a capacity change of a cluster including one or more virtual machine instances forming a component of a virtualised function in which at least one of the VM instances before the capacity change includes internal state information relating to a pre-capacity-change user request for the component, the method comprising using a controller to re-route post-capacity-change user requests referencing, implicitly or explicitly, the internal state information using matching rules mapping the or each pre-capacity-change VM instance with one or more post-capacity-change VM instance. The controller can re-route requests to a load balancer of the environment. The controller can re-route requests directly to one or more network elements of the environment. The or each post-capacity-change VM instance can include the internal state information. The capacity change of the cluster can include addition or removal of one or more virtual machine instances, the method can further include load-balancing workload for the component using a load-balancer of the environment in order to distribute current and future requests between the post-capacity-change VM instances. The internal state information can be migrated from a pre-capacity-change VM instance to at least one post-capacity-change VM instance. A virtual machine can be in the form of an execution environment in the form of a container for the environment. Accordingly, reference to a virtual machine and a virtual machine monitor and so on should be taken to include or be replaced by elements for, more generally, an execution environment.

According to an example, there is provided a distributed computing environment, including a hypervisor executing on physical computing hardware, in which one or more virtual machine instances are deployed to form a component of a virtualised function, at least one of the VM instances before a capacity change of the component including internal state information relating to a pre-capacity-change user request for the component, the environment including a controller to re-route post-capacity-change user requests referencing, implicitly or explicitly, the internal state information using matching rules mapping the or each pre-capacity-change VM instance with one or more post-capacity-change VM instance. The distributed computing environment can further include a load balancer, wherein the controller is operable to re-route requests to the load balancer. The controller can be operable to re-route requests directly to one or more network elements of the environment. The or each post-capacity-change VM instance can include the internal state information. The environment can be operable to add or remove one or more virtual machine instances, and the load-balancer can be operable to distribute workload for the component by distributing requests between the post-capacity-change VM instances. The distributed computing environment can further be operable to migrate the internal state information from a pre-capacity-change VM instance to at least one post-capacity-change VM instance.

According to an example, there is provided a computer program product, comprising a computer usable medium having computer readable program code embodied therein, said computer readable program code adapted to be executed to implement a method for managing user requests in a distributed computing environment following a capacity change as provided herein.

### BRIEF DESCRIPTION OF THE DRAWINGS

Embodiments will now be described, by way of example only, with reference to the accompanying drawings, in which:
Figure 1 is a schematic representation of a virtualised system in the form of a distributed computing environment according to an example;
Figure 2 is a schematic representation of a distributed computing environment showing the relative disposition of elements of the system following growth/de-growth of a component according to an example;
Figure 3 is a schematic representation of the logical interconnectivity amongst various elements of a typical distributed computing environment; and
Figure 4 is a schematic representation of the logical interconnectivity amongst various elements of a distributed computing environment according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Typically, whenever a component instance running in a VM processes a request on behalf of a given user, it stores internally (such as in its volatile memory or persistent storage local/dedicated to the VM for example) some state information, referred to as internal state information, that needs to be reused whenever the next request comes from the same user. An example of this situation may arise in the implementation of an elastic IMS Presence Server (PS) where, once a user publishes its presence information to the PS, it is stored within a specific VM handling the request of the user, based on the policy configured within the load-balancer. Then, whenever another user subscribes to the presence information of said first user, its requests are routed to the same component instance that stores the state information for the user.

This can be accomplished in the case of a statically preconfigured cluster of VMs using a pre-defined policy for routing PS messages across VMs implementing an elastic PS, based on the name of the user who is publishing presence information, or on the name of the user whose presence information the system is subscribing to. For example, this can be done by computing a hash of said user name, both in publish and in subscribe PS messages, then mapping the hash value onto an index representing which VM instance to use, among the available ones for the elastic PS service. This is an example of a stateful management of requests.

An alternate implementation is a stateless one, where the component processes the request on behalf of a user, but any possibly associated internal state information is stored in an external database, or it is embedded within the further messages made available to other components or to the end-user, in such a way that said information is always carried over in additional messages connected to requests on behalf of that user. In such a case, a request can be handled by any of the available instances equally well, even picked at random, because any additional state information needed to process the request is either recovered from the external database, or embedded within the same request message itself.

In the above described context, an issue is how growth and de-growth of a service is handled - that is, how the spreading logic of the load-balancer when a new VM is added to, or a VM is removed from, the cluster of VMs realizing a component is modified.

A stateless implementation has the advantage to leave the run-time completely free to reroute requests so as to make an optimum usage of the underlying resources, for example to spread the work-load as evenly as possible to load-balance each request depending on the instantaneous work-load each instance is having. This allows for seamless growth of the component because a new VM added to the cluster can handle any request related to any user, right after its instantiation, even though requests related to that user have been handled by other VMs up until before the growth. However, it also has the disadvantage to bring additional overheads. Storing the component state to an external database or embedding it into further requests introduces computational, network and storage overheads that risk degradation of the performance that is achievable with a given set of VMs, leading to significantly lower throughputs and higher latencies which may be unnecessary.

On the other hand, a stateful implementation has the advantage of being able to keep the original performance of the equivalent non-elastic implementation of a service, but at the same time it makes elastic growth and de-growth more complex because of the need to change the destination VM for a subset of the elements.

Stateful components in IMS systems traditionally forward Session Initiation Protocol (SIP) messages by requesting other components to refer back to specific component instances through the use of dedicated fields within the SIP protocol, such as the Via and Record-Route ones, respectively for responses and for subsequent requests. However, as stated above, this creates the problem that, whenever growth or de-growth of cluster occurs in such a system, and the mapping from user's requests to specific instances handling them needs to change (to spread part of the load onto the new added instance(s), or to move existing load from a removed instance back onto remaining instances for example), there is no immediate way to prevent other parts of the system still referring back to the same instance. So, these requests may be dropped, as they will reach VMs that cannot handle them any more (in the case of growth), or they may try to reach VMs that have been terminated (in the case of de-growth for example). Alternatively, to avoid dropped requests/calls, such systems have to wait, for example, until any stateful interaction with a given instance is finished, before terminating the instance, thereby impairing the flexibility by which elasticity can be realized.

In modern elastic cloud applications, one might refer to a whole set of a component instances (VMs) with a single IP address from the outside and then direct any relevant traffic always to a load-balancer. Then, the load-balancer would reroute the requests to specific instances as appropriate, also accounting for possible state movements during elastic growth/de-growth, and considering the stateful/stateless nature of the component. One drawback of such an approach is that the load-balancer might introduce additional latency to all requests coming to the component, and it might become itself a bottleneck for the distributed component. For example, this is the kind of approach found in Amazon Elastic Load Balancer and its "sticky sessions" feature for HTTP traffic, where a special cookie is introduced within the HTTP exchanges that allows the load-balancer to re-route the request towards the same VM that handled it in the first place, to ensure that the relevant state information is found by subsequent requests. The Amazon technique, besides suffering of the mentioned issue, applies only to HTTP traffic.

According to an example, a method for managing user requests in a distributed computing environment following a capacity change of a cluster including one or more virtual machine instances forming a component of a virtualised function in which at least one of the VM instances before the capacity change includes internal state information relating to a pre-capacity-change user request for the component is provided. A controller is used to re-route post-capacity-change user requests referencing, implicitly or explicitly, the internal state information using matching rules mapping the or each pre-capacity-change VM instance with one or more post-capacity-change VM instance. The component is therefore stateful elastic component in which VMs include internal state information.

Thus, a mechanism for managing state information in stateful elastic components is provided. In an example, a software defined networking (SDN) component can be used to re-route post-capacity-change user requests. As noted above, in a stateful component, a request related to a given user (or a subset of users) is to be delivered to the same instance/VM that handled it the first time, where possible additional state associated to the interaction is being stored. Therefore, the component functionality and associated protocol is designed so that additional subsequent interactions of other components or end-user clients target said specific instance/VM (e.g., being destined to the IP address of that specific VM). It is therefore possible to dynamically and seamlessly reroute traffic initially targeting a specific instance of a component running within a specific VM, among the VMs handling the traffic, to the right VM/instance, where the corresponding state has been previously migrated as a consequence of a growth or de-growth process in response to a workload change resulting in a component capacity change. In an example, the rerouting can be performed by an SDN-enabled network component such as a router or a switch acting at L3 or higher.

This may be coupled with a lightweight layer that adapts a message contents as needed, after the rerouting, in order for the receiving component to correctly receive and parse the message as actually directed to itself.

In the case of de-growth, in which one or more VM instances is removed or terminated in order to modify component capacity, a cluster of N VMs is provided to realise stateful component functionality. An elasticity controller, or similar device, decides to remove one or more instances from the cluster as a result of change in workload for the component for example.

As a consequence, the load-balancer is instructed to reroute the workload corresponding to removed instance(s) to the remaining VMs of the cluster according to some application-specific spreading algorithm. It is assumed, as will typically be the case, that the internal state information of the or each terminated VM has been migrated to the remaining VMs of the cluster. However, other interacting components may still try to reach out to one of the VMs that have been removed, such as by explicitly mentioning its IP address for example. According to an example, the switching rule(s) of the networking elements that have to be traversed in order to deliver any request to the terminated or to-be-removed VMs are updated or modified, such as by means of SDN-based reprogramming of the configuration using a controller for example, in such a way that said requests are rerouted to the load-balancer instead. That is, a controller is used to re-route post-capacity-change user requests referencing, implicitly or explicitly, the internal state information using matching rules mapping the or each pre-capacity-change VM instance with one or more post-capacity-change VM instance.

Accordingly, the load-balancer will receive said requests and can resend them to the appropriate instance/VM among the remaining ones. In an example, the controller can also instruct the network elements to direct the packets directly to the VMs where the corresponding state information is to be found, as due to the post-de-growth load-balancer configuration, said last information can be readily made available to the controller and switching logic. If the receiving component needs a re-adaptation of application-level fields of the message, in addition to the pure IP-level ones (IP address and/or port), then a lightweight component (to be placed either within the load-balancer or within the receiving VMs themselves for example) that would actually receive the message, make the adaptation, then forward it to the actual component, can be provided so that the latter would require no changes as compared to a traditional implementation relying on a cluster of instances.

In the growth case, in which one or more VM instances is added in order to modify component capacity, the elasticity controller can add one or more VMs to a cluster of N VMs realizing a stateful component. Therefore, the load-balancer can be instructed to reroute traffic in such a way that requests are now also spread across the new added VMs. It is assumed, as will typically be the case, that internal state information has been migrated to the new VMs of the cluster as appropriate. However, other interacting components may still try to reach out to one of the old VMs in the cluster, that do not have the internal state information available to them anymore, such as by explicitly mentioning their IP address in the request for example. According to an example the switching rule(s) of the networking elements that have to be traversed in order to deliver any requests are updated or modified, such as by means of SDN-based reprogramming of the configuration using a controller for example, in such a way that said requests are rerouted to the load-balancer instead. Accordingly, a controller is used to re-route post-capacity-change user requests referencing, implicitly or explicitly, the internal state information using matching rules mapping the or each pre-capacity-change VM instance with one or more post-capacity-change VM instance.

The load-balancer can resend said requests to the appropriate new VMs that have been added. Alternatively, the controller may instruct the network elements to route the packets directly to the VMs where the corresponding state information can now be found, as due to the post-growth load-balancer configuration, if said information can be readily made available to the controller and switching logic. A similar observation as above can be made whenever application-level fields of the message may need to be adapted, namely an additional lightweight component can be interposed to perform such tasks either in the load-balancer or directly within the components VMs themselves.

An exemplary scenario where the application of the described technique is advantageous is the following. A component can be grown by splitting the workload of the most loaded instance into two, and handing over half of the workload to the new added VM, and migrating any possibly associated state. This can, for example, be applied to growing an elastic IMS component. A rule, provided in a controller, and stating that any application request directed to the VM that has been doubled is to now be redirected to the load-balancer can be provided. The controller would ensure that the new routing rule is properly reflected within the appropriate network elements as needed.

The load-balancer will thus hand over the request to either one of the two VMs, as appropriate. Alternatively, one or more rules can be provided to specifically target packets directed to a non-existent VM, and which should therefore be redirected to a newly created VM, without needing interaction with the load-balancer. This can be possible if, for example, the requests to be routed to the new VM can be identified based on the source IP address. Similarly, when de-growing, it is possible to merge together the workload of the two least loaded instances, handing over the workload of the least loaded instance to the second least loaded one, and migrating any possibly associated state.

In an example, a controller rule stating that any application request directed to either of the two VMs has to now be redirected to the load-balancer can be added. This will hand such requests over to the single VM where the traffic has been consolidated. In this case, the rule may actually instruct redirection of the traffic towards the least loaded VM that has been removed towards the second least loaded one onto which traffic is consolidated, saving the interaction with the load-balancer.

In terms of specific SDN technology, the above can be realized by leveraging an OpenFlow controller and correspondingly network elements in the data centres compliant with OpenFlow for example.

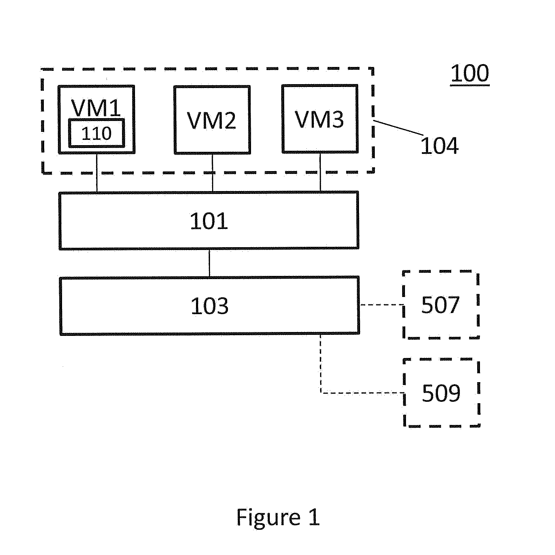

Figure 1 is a schematic representation of a virtualised system in the form of a distributed computing environment according to an example. Multiple virtual machine instances VM1, VM2, VM3 are executing over physical hardware resources 103 of the environment 100 by way of a hypervisor or virtual machine monitor 101. The VMs, VM1-3, form a first set of virtual machine instances forming an elastic cluster 104 for a component of a virtualised function. Internal state information 110 relating to a pre-capacity-change user request for the component 104 is present in one of the VMs, VM1, as described above.

In the event of a capacity change of the component, such as be addition or removal of a VM instance for example, a controller 507 can be used to re-route post-capacity-change user requests referencing, implicitly or explicitly, the internal state information 110 using matching rules 509 mapping the or each pre-capacity-change VM instance with one or more post-capacity-change VM instance.

Although figure 1 has been described with reference to a VMM and a set of physical resources, it should be appreciated that the hardware resources 103 and the VMM 101 can actually represent multiple hardware resources and multiple VMMs running on top of them. In this connection, VMs of a cluster can be instantiated over different VMMs that themselves may be executing over different sets of physical hardware.

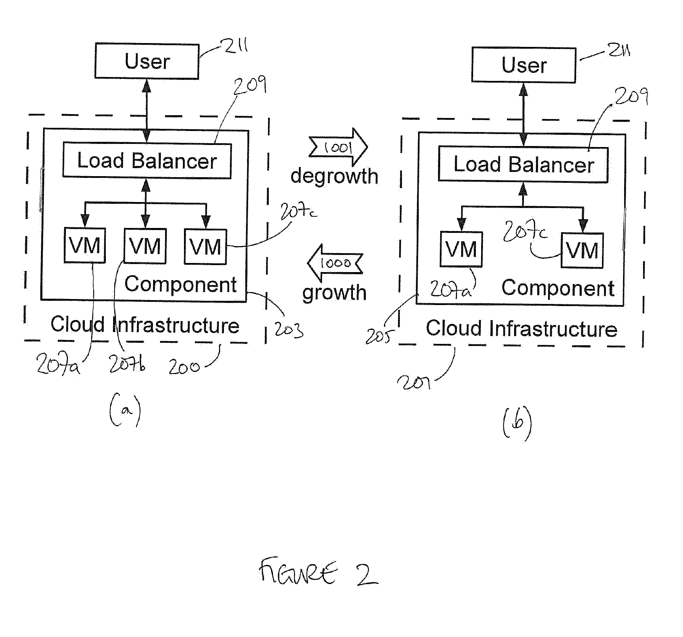

Figure 2 is a schematic representation of a distributed computing environment showing the relative disposition of elements of the system following growth/de-growth of a component according to an example. A cloud infrastructure 200, 201 in the form of a distributed computing environment includes an elastic component 203, 205. In figure 2a, which shows the infrastructure after growth 1000, three VM instances 207a-c are provided for component 203. A load balancer 209 is provided to react to a user request 211 that prompts a capacity change for component 203, 205. In the example of de-growth 1001, a VM instance 207b is removed leaving instances 207a and 207c for the component 205.

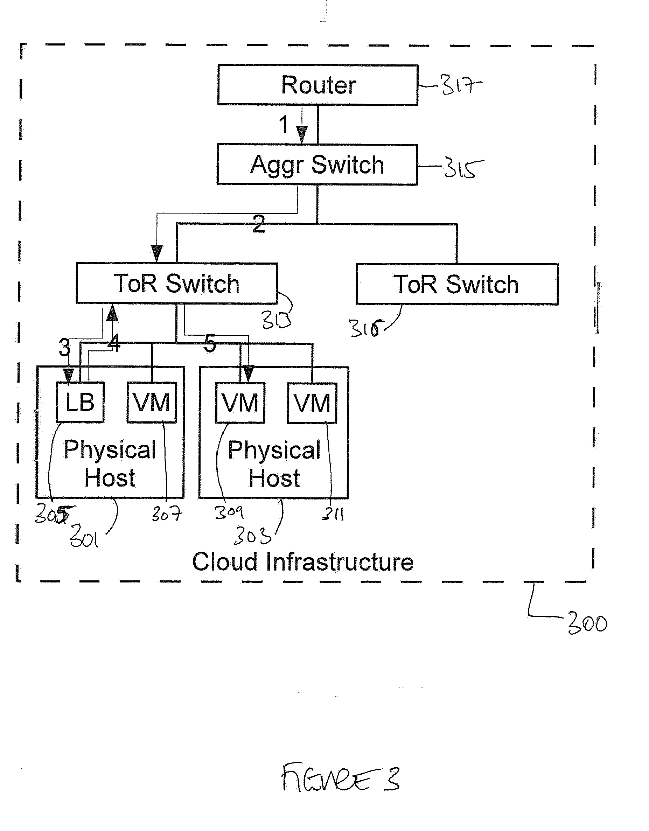

Figure 3 is a schematic representation of the logical interconnectivity amongst various elements of a typical distributed computing environment. In a distributed computing environment 300, two physical hosts 301, 303 are provided and VM instances are deployed across both. For example, VM instances 305, 307 are deployed on host 301, and VM instances 309, 311 are deployed on host 303. VM 305 takes the form of a load balancer (LB), although it could be a standalone device to perform load balancing although typically it will be in the form of a VM.

Top-of-Rack (ToR) switches 313, 316 connecting hosts in a rack are provided, as well an Aggregation switch 315 interconnecting the ToR switches, and router 317. A user request to be routed to VM 309 traverses the system from the router 317 to switch 315 (path 1), from switch 315 to switch 313 (path 2), from switch 313 to LB 305 (path 3), then from LB 305 it is re-routed back to switch 313 (path 4), and from switch 313 to VM 309 (path 5), which is the final destination. That is, the data has to traverse a path that takes it to an LB so that a VM with the internal state information relevant to the request can be located, and so the request must be re-routed in a complex, computational inefficient and time-consuming manner.

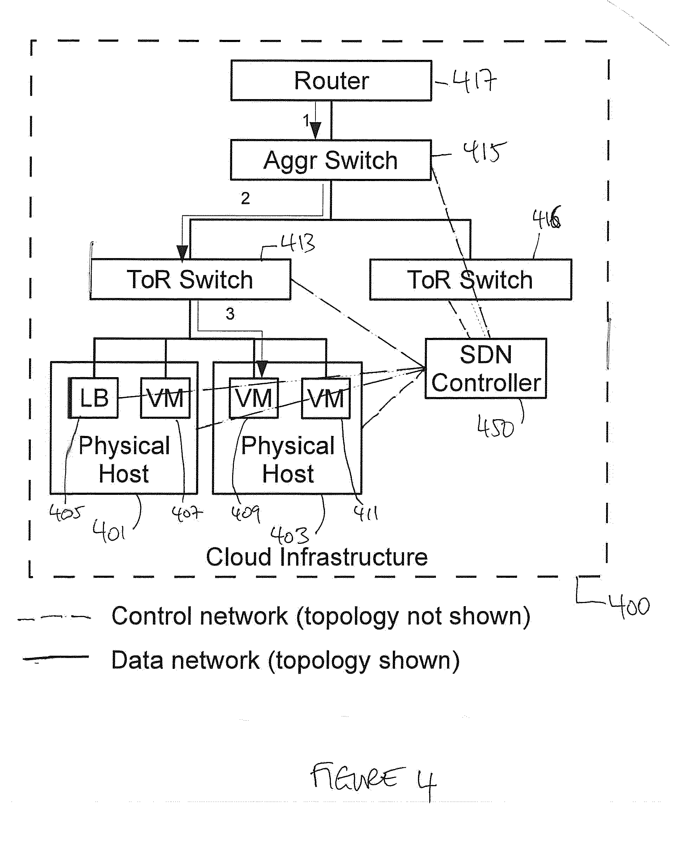

Figure 4 is a schematic representation of the logical interconnectivity amongst various elements of a distributed computing environment according to an example. In a distributed computing environment 400 according to an example, two physical hosts 401, 403 are provided and VM instances are deployed across both. For example, VM instances 405, 407 are deployed on host 401, and VM instances 409, 411 are deployed on host 403. VM 405 takes the form of a load balancer (LB), although it could be a standalone device to perform load balancing although typically it will be in the form of a VM.

Top-of-Rack (ToR) switches 413, 416 connecting hosts in a rack are provided, as well an Aggregation switch 415 interconnecting ToR switches, and router 417. A user request to be routed to VM 409 traverses the system from the router 417 to switch 415 (path 1), from switch 415 to switch 413 (path 2), from switch 413 to VM 409 (path 3), thereby significantly reducing the path compared to the prior art system depicted in figure 3.

That is, typically, messages have to reach an LB component, which in turn redirects them to the proper VM which is, as a result of dynamic change of the component due to elastic growth and degrowth, not at the location that the request and/or other components of the system 'thought'.

With reference to figure 3, a message is therefore trying to reach a VM which no longer exists due to a growth or degrowth operation, and so the ToR switch 313 (or the Agg Switch 315) for example rewrites the message by replacing the destination IP of the intended VM with the one of the existing VMs, which is now in charge of handling traffic previously directed towards the intended VM.

According to an example, as schematically depicted in figure 4, messages go straight to VMs, but the intelligent network is instructed to re-route the messages, possibly rewriting part of their IP headers (e.g., the exact destination IP address), according to the rules programmed by a controller 450, such as an SDN controller, which in turn receives instructions from the LB 405 of the component 401 so that messages are routed to the VM that is operable to handle the traffic associated with the VM that no longer includes the relevant internal state information due to a growth/de-growth operation.

A virtualised system as shown in and described with reference to figures 1 to 4 is a scalable computing system in the form of a distributed computing environment in which a hypervisor executes on the physical computing hardware and is operable to instantiate one or more VMs for the system. A VM instance can be used to scale an application or application part in order to provide an additional instance (or an instance if there were previously none executing) for the application or part.

As used herein, the term virtual machine is not intended to be limiting. For example, a virtual machine can be in the form of an execution environment in the form of a container, or by way of OS-level virtualization for example. Accordingly, different isolated containers, or namespaces, or execution environments, residing in the same OS, but sufficiently isolated so that they are essentially executing in a exclusive OS environment can be used.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method for managing user requests in a distributed computing environment following a capacity change of a cluster including one or more virtual machine instances forming a component of a virtualised function in which at least one of the VM instances before the capacity change includes internal state information relating to a pre-capacity-change user request for the component, the method comprising:
using a controller to re-route post-capacity-change user requests referencing, implicitly or explicitly, the internal state information using matching rules mapping the or each pre-capacity-change VM instance with one or more post-capacity-change VM instance.

2. A method as claimed in claim 1, wherein the controller re-routes requests to a load balancer of the environment.

3. A method as claimed in claim 1, wherein the controller re-routes requests directly to one or more network elements of the environment.

4. A method as claimed in any preceding claim, wherein the or each post-capacity-change VM instance includes the internal state information.

5. A method as claimed in any preceding claim, wherein the capacity change of the cluster includes addition or removal of one or more virtual machine instances, the method further including load-balancing workload for the component using a load-balancer of the environment in order to distribute current and future requests between the post-capacity-change VM instances.

6. A method as claimed in any preceding claim, wherein the internal state information is migrated from a pre-capacity-change VM instance to at least one post-capacity-change VM instance.

7. A method as claimed in any preceding claim, wherein a virtual machine is in the form of an execution environment in the form of a container for the environment.

8. A distributed computing environment, including a hypervisor executing on physical computing hardware, in which one or more virtual machine instances are deployed to form a component of a virtualised function, at least one of the VM instances before a capacity change of the component including internal state information relating to a pre-capacity-change user request for the component, the environment including a controller to re-route post-capacity-change user requests referencing, implicitly or explicitly, the internal state information using matching rules mapping the or each pre-capacity-change VM instance with one or more post-capacity-change VM instance.

9. A distributed computing environment as claimed in claim 8, further including a load balancer, wherein the controller is operable to re-route requests to the load balancer.

10. A distributed computing environment as claimed in claim 8, wherein the controller is operable to re-route requests directly to one or more network elements of the environment.

11. A distributed computing environment as claimed in any of claims 8 to 10, wherein the or each post-capacity-change VM instance includes the internal state information.

12. A distributed computing environment as claimed in claim 9, wherein the environment is operable to add or remove one or more virtual machine instances, and wherein the load-balancer is operable to distribute workload for the component by distributing requests between the post-capacity-change VM instances.

13. A distributed computing environment as claimed in any of claims 8 to 12, further operable to migrate the internal state information from a pre-capacity-change VM instance to at least one post-capacity-change VM instance.

14. A computer program product, comprising a computer usable medium having computer readable program code embodied therein, said computer readable program code adapted to be executed to implement a method for managing user requests in a distributed computing environment following a capacity change as claimed in any of claims 1 to 7.
